# EUROPÄISCHE PATENTSCHRIFT

(11) **EP 0 412 293 B1**
(45) Veröffentlichungstag und Bekanntmachung des Hinweises auf die Patenterteilung: **27.10.1993**
(21) Anmeldenummer: 90112809.0
(22) Anmeldetag: 05.07.1990
(51) Int. Cl.: B60S 1/08

(54) **Verfahren zur Anpassung der Empfindlichkeit eines Sensorsystems zur Erfassung von Niederschlägen bei der Steuerung von Wischintervallen eines Scheibenwischerantriebs und Vorrichtung zur Durchführung des Verfahrens**
Procedure for adapting the sensitivity of a sensor system for detecting the intensity of rain in a control system for wiping intervals of a wind-screen wiper drive, and arrangement for carrying out the procedure
Procédé pour adapter la sensibilité d'un système à détecteur pour détecter les précipitations, dans une commande d'intervalles d'essuyage d'un dispositif d'entraînement d'essuie-glace et dispositif pour exécuter le procédé

(30) Priorität: 08.08.1989 DE 3926175
(43) Veröffentlichungstag der Anmeldung: 13.02.1991
(73) Patentinhaber: MERCEDES-BENZ AG, 70327 Stuttgart (DE)
(72) Erfinder: Leistenschneider, Raimund, D-6640 Merzig-Besseringen (DE)

(56) Entgegenhaltungen:
- EP-A- 0 308 990
- DE-U- 8 914 426
- US-A- 4 871 917
- PATENT ABSTRACTS OF JAPAN vol. 12, no. 197 (M-706)(3044) 08 Juni 88,& JP-A-63 2758 (NISSAN MOTOR) 07 Januar 88,

## Beschreibung

Die Erfindung bezieht sich auf ein Verfahren zur Anpassung der Empfindlichkeit eines Sensorsystems zur Erfassung von Niederschlägen bei der Steuerung von Wischintervallen eines Scheibenwischerantriebs an die jeweiligen Fahrbedingungen nach dem Oberbegriff des Patentanspruchs 1 und auf eine Vorrichtung zur Durchführung dieses Verfahrens.

Mit einer bekannten selbsttätigen Steuerung von Kraftfahrzeug - Scheibenwischanlagen (SAE-Paper 85 1637) werden die Wischintervallabstände kontinuierlich zwischen 0 und 20 Sekunden eingestellt. Der Fahrzeugbenutzer kann mit dem Scheibenwischer - Steuerschalter den automatischen Intervallbetrieb ein- und ausschalten.
Das in einem Gehäuse aufgenommene und an der Außenhaut eines Kraftfahrzeuges angeordnete Sensorsystem dieser Steuerung besteht aus einer schwingfähigen Platte, einem daran befestigten piezoelektrischen Element und einem Signalverstärker.
Das piezoelektrische Element wandelt die kinetische Energie auf die schwingfähige Platte aufprallender Niederschläge in impulsformige elektrische Spannungssignale, die verstärkt werden. Rauschanteile werden - z. B. durch einen Bandpaßfilter - ausgefiltert. Die Spannungsimpulse werden schließlich einem integrierenden Kondensator zugeführt, dessen Ausgang an einen Eingang eines Spannungsvergleichers angeschlossen ist. Erreicht die Ausgangsspannung des Kondensators die Größe der Referenzspannung des Vergleichers, so gibt dieser an das Intervallsteuergerät einen Steuerimpuls ab. Das Steuergerät aktiviert daraufhin den Scheibenwischer - Antriebsmotor in bekannter Weise mit einem Rechteckimpuls.
Der Steuerimpuls des Vergleichers wird gleichzeitig als Entladeimpuls für den Kondensator verwendet. Die Wischintervalle werden umso kürzer, je schneller der Kondensator wieder aufgeladen wird, d. h. je höher die von der Sensoreinheit erzeugte elektrische Spannung ist.
Eine Grundfrequenz von etwa 3 Intervallen pro Minute, die in der "AUTOMATIK"-Stellung des Steuerschalters auch ohne Niederschläge eingehalten wird, wird durch einen der Sensoreinheit am Kondensatoreingang parallel geschalteten Konstantstromkreis gesteuert.
Die schwingfähige Platte ist gegen hochfrequente Schwingungen der Fahrzeugkarosserie durch Gummielemente gedämpft.

Die kinetische Energie aufprallender Niederschläge ist abhängig von der Masse der Tropfen und von der Aufprallgeschwindigkeit.
Um an der Sensoreinheit gleiche Windverhältnisse wie an der Windschutzscheibe zu erhalten, muß letztere in einem Gebiet angebracht werden, in dem auch bei hoher Fahrgeschwindigkeit positiver Staudruck herrscht.
Daher ist eine Kompensation der Fahrzeuggeschwindigkeit, die natürlich auch die Aufprallstärke von Niederschlägen beeinflußt - im genannten SAE-Paper wird angegeben, daß deren kinetische Energie annähernd von der dritten Potenz der Fahrgeschwindigkeit abhängt - notwendig. Sie wird in die bekannte Steuerung durch einen bestimmten, empirisch ermittelten Anstellwinkel der schwingfähigen Platte von 15° gegenüber der Horizontalen eingebracht.

Ein dem vorstehend beschriebenen ähnliches System ist auch aus der EP 0 115 338 A2 bekannt.

Eine weitere Vorrichtung zur Steuerung von Wischintervallen ist aus der DE 26 30 470 A1 bekannt. In dieser Steuerung wird ein kapazitiver Feuchtesensor verwendet, dessen Signale außer zur Erfassung der Dichte auftreffender Niederschläge auch zur Ermittlung der Stärke dieser Niederschläge dienen sollen.
Die Stärke der Niederschläge wird in der bekannten Steuerung wahlweise durch eine differenzierte Oberflächenstruktur des Sensors selbst - die entsprechend den unterschiedlichen Tropfenvolumina bzw. -aufprallkräfte unterschiedliche Sensorausgangssignale produziert - oder durch elektrische Bewertung der Pegel der in einem Impulsverstärker verstärkten Sensorsignale erfaßt.

Sinn einer solchen Stärkeerfassung von auftreffenden Niederschlägen ist es, bei einem plötzlich auftretenden Platzregen eine schnelle Reaktion des Scheibenwischerantriebs zu erhalten und eine entsprechende Steuerung des Abstandes der einzelnen Wischzyklen voneinander, also der Wischintervalle, zu erhalten.

Ein wesentlicher Gesichtspunkt bleibt bei den bekannten Anordnungen unberücksichtigt, nämlich die Anpassung der Sensorsysteme an Änderungen des Gewichtes einzelner Niederschlagspartikel in Abhangigkeit von der Temperatur, insbesondere in der Umgebung des Gefrierpunktes. Bekanntlich ist das Gewicht von Schneeflocken bei Temperaturen oberhalb des Gefrierpunktes höher ("nasser Schnee") als bei niedrigeren Temperaturen. Der erwähnte nasse Schnee bringt einen Niederschlagssensor der eingangs genannten Art noch zuverlässig zum Ansprechen, während noch so heftiger Fall von Schneeflocken bei Temperaturen unterhalb des Gefrierpunktes wegen deren geringer Gewichte den Sensor nicht so stark beaufschlagt, daß durch dessen Signal Wischvorgänge ausgelöst werden können, obwohl möglicherweise bereits eine Sichtbehinderung des Fahrzeugführers z. B. durch auf der Windschutzscheibe schmelzende Schneeflocken eintritt.

Aufgabe der Erfindung ist es daher, ein Verfahren anzugeben, mittels dessen die Empfindlichkeit eines bekannten Sensorsystems an die jeweiligen Fahr- und Umweltbedingungen, insbesondere an die Umgebungstemperatur, verbessert wird, und eine gattungsgemäße Vorrichtung so weiterzubilden, daß das erfindungsgemäße Verfahren damit durchgeführt werden kann.

Diese Aufgabe wird mit den kennzeichnenden Merkmalen des Verfahrensanspruchs 1 erfindungsgemäß gelöst. Die kennzeichnenden Merkmale der Unteransprüche offenbaren vorteilhafte Weiterbildungen des erfindungsgemäßen Verfahrens.

Zwar ist eine Anordnung zur Steuerung einer Scheibenwischanlage bekannt (DE 35 38 553 A1), bei der ein Feuchtigkeitssensor verwendet wird und bei der Maßnahmen zur Kompensation der Auswirkungen von Schwankungen der Umgebungstemperatur auf die Zuverlässigkeit der Anordnung getroffen sind. Mit diesen Maßnahmen, die lediglich eine Fehlauslösung von Wischzyklen bei unterschiedlichen Temperaturen einer Meßstrecke des Feuchtigkeitssensors und einer Referenzmeßstrecke verhindern sollen, ist eine gezielte temperaturabhängige Änderung der Ansprechempfindlichkeit eines Sensorsystems mit einem druckempfindlichen Sensor nicht möglich.

In einer weiteren bekannten Scheiben-Reinigungsvorrichtung (DE 34 42 948 A1) kann die Anpreßkraft der Scheibenwischer durch eine Anpreßfeder verändert werden, die aus einem bei Temperaturänderungen seine Federsteifigkeit und/oder seine Geometrie ändernden Material besteht, indem die Temperatur der Anpreßfeder entsprechend der bei verschiedenen Fahrzeuggeschwindigkeiten erforderlichen Anpreßkraft eingestellt wird.
Ein Hinweis auf eine Losung der Aufgabe der Erfindung kann auch der letztgenannten Druckschrift nicht entnommen werden.

Durch das erfindungsgemäße Verfahren und die Vorrichtung zu dessen Durchführung wird die Wischintervallfunktion verbessert und dem Sensorsystem die Unterscheidung der verschiedenen Niederschlagskörper ermöglicht. Insbesondere bei Verarbeitung von Temperatur- **und** Fahrgeschwindigkeitsinformationen wird das Sensorsystem optimal an die jeweiligen Fahrbedingungen angepaßt. Dadurch werden auch durch Aufprall von Schneeflocken bei Temperaturen unterhalb des Gefrierpunktes Wischvorgänge einer durch einen Sensor gesteuerten Kraftfahrzeug - Scheibenwischeranlage zuverlässig ausgelöst.
Weitere Einzelheiten und Vorteile gehen aus der Zeichnung zweier Ausführungsbeispiele und deren sich hier anschließender eingehender Beschreibung hervor.

Es zeigen
- Figur 1: eine erfindungsgemäße Vorrichtung mit Einbeziehung der Umgebungstemperatur zur Anpassung der Empfindlichkeit des Sensorsystems,
- Figur 2: eine andere Vorrichtung mit geänderter Verarbeitung der Temperaturinformation und zusätzlicher Einbeziehung von Fahrgeschwindigkeitsinformationen in die Anpassung des Sensorsystems.

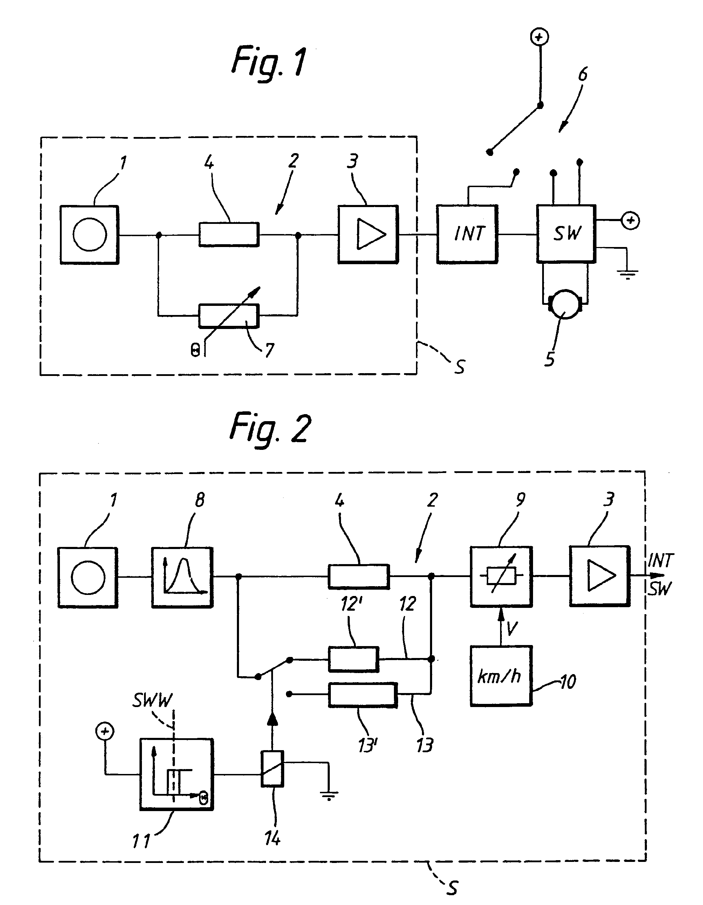

Ein aufprallempfindlicher Niederschlagssensor 1 beliebiger Bauart ist in einem in **Figur 1** gezeigten Sensorsystem S über eine Übertragungsstrecke 2 an einen Verstärker 3 angeschlossen. Die Übertragungsstrecke 2 weist eine - durch einen ohmschen Widerstand 4 symbolisch angedeutete - Eigendämpfung auf. Der Ausgang des Verstärkers 3 ist an ein nur schematisch angedeutetes Wischintervallsteuergerät INT einer Kraftfahrzeug - Scheibenwischeranlage SW mit einem Motor 5 und einem manuell schaltbaren Steuerschalter 6 angeschlossen.
Der Gesamtwiderstand der Übertragungsstrecke 2 setzt sich aus deren Eigendämpfung und einem parallel dazu angeordneten, in Abhängigkeit von der Umgebungstemperatur Θ veränderlichen elektrischen Widerstand 7 zusammen. Bei höheren Temperaturen hat letzterer einen höheren Widerstandswert als bei niederen Temperaturen, so daß der Gesamtwiderstand der Übertragungsstrecke mit der Umgebungstemperatur Θ sinkt und steigt. Dies führt dazu, daß die Ausgangssignale des Sensors 1 bei niedrigen Temperaturen weniger gedämpft werden als bei höheren Temperaturen, wodurch das Sensorsystem auch auf Niederschläge mit geringen Einzelmassen, insbesondere Schneeflocken, zuverlässig ansprechen kann.
Zur technischen Realisierung des Widerstandes 7 eignen sich alle Bauelemente, deren Kennwerte (Widerstands- oder Spannungsverlauf) sich bei Temperaturschwankungen ändern, z. B. NTC- oder PTC - Widerstände oder Thermoelemente.

Eine abgeänderte Vorrichtung zeigt **Figur 2**; dort sind in der Übertragungsstrecke 2 ferner noch ein Bandpaß 8 und eine Verarbeitungsschaltung 9 für von einem elektronischen Tachometer 10 erzeugte Fahrgeschwindigkeitssignale v vorgesehen. Der Bandpaß 8 dient lediglich dazu, die statische Beaufschlagung des Niederschlagssensors 1 durch den Fahrtwind auszufiltern. Die Verarbeitungsschaltung 9 wirkt sich dahingehend aus, daß die Ansprechempfindlichkeit des Sensorsystems bei höheren Fahrgeschwindigkeiten durch Erhöhung des Gesamtwiderstandes der Übertragungsstrecke 2 verringert und bei niedrigen Fahrgeschwindigkeiten durch Verringerung des Gesamtwiderstandes der Übertragungsstrecke 2 erhöht wird. Damit wird der höheren Relativgeschwindigkeit zwischen Niederschlägen und einem schnell fahrenden Fahrzeug und der daraus resultierenden höheren kinetischen Energie der auf den Sensor 1 treffenden Niederschläge Rechnung getragen.
Zur technischen Realisierung der Verarbeitungsschaltung 9 werden die Geschwindigkeitssignale v des Tachometers 10 - also z. B. eine Spannung, ein Strom oder eine Frequenz - einem geeigneten elektronischen Bauelement zugeführt, dessen Kennwerte sich in Abhängigkeit von der Größe der zugeführten Signale ändert. Dieses kann z. B. ein Varistor sein oder ein Optokoppler, dessen mit dem durchfließenden Strom veränderliche Leuchtstärke durch einen geeigneten Empfänger ausgewertet wird.

In Abwandlung der in Figur 1 gezeigten Anordnung zur Temperaturanpassung wird in der Anordnung nach Figur 2 ein Schwellwertschalter 11 verwendet, dessen Schaltpunkt bzw. Schwellwert SWW in der Nähe des Gefrierpunktes - selbstverständlich mit einer geringen Hysterese - angesiedelt ist. Anstelle des temperaturabhängig veränderlichen Widerstandes aus Figur 1 werden hier zwei Verbindungsabschnitte 12 und 13 mit unterschiedlichen elektrischen Widerstanden 12' und 13' verwendet. Eine Umschaltvorrichtung 14 wird von dem Schwellwertschalter 11 gesteuert und schließt bei unterhalb des Schwellwertes SWW liegender Umgebungstemperatur den Verbindungsabschnitt 12 mit dem niedrigeren Widerstand 12', bei oberhalb des Schwellwertes SWW liegender Umgebungstemperatur Θ den Verbindungsabschnitt 13 mit dem höheren Widerstand 13' an die Übertragungsstrecke 2 an.
Mit dieser Schaltung wird dem Umstand Rechnung getragen, daß sich die Umgebungstemperatur Θ nur in der unmittelbaren Umgebung des Gefrierpunktes auf die Masse einzelner Niederschlagspartikel auswirkt.

Die Auswertung und Verarbeitung der Ausgangssignale des Verstärkers sind nicht Gegenstand der hier beschriebenen Erfindung. Sie sind vielmehr dem einleitend angegebenen Stand der Technik, insbesondere der EP-A2, zu entnehmen. Jedoch wirkt sich natürlich die Anpassung der Verstärkereingangssignale auf die Ausgangssignale in der Weise aus, daß bei geringer Empfindlichkeit, d. h. bei hohem Gesamtwiderstand der Übertragungsstrecke 2, eine kurze Intervalldauer nur bei sehr starkem Niederschlag eingestellt wird, während bei niedrigem Gesamtwiderstand schon eine verhältnismäßig geringe Aufprallenergie am Niederschlagssensor 1 Wischvorgänge auslöst und eine Verkürzung der Intervalldauer herbeiführt.

## Patentansprüche

1. Verfahren zur Anpassung der Empfindlichkeit eines Sensorsystems zur Erfassung von Niederschlägen bei der Steuerung von Wischintervallen eines Scheibenwischerantriebs eines Kraftfahrzeugs in Abhängigkeit von der durch einen druckempfindlichen Sensor eines Sensorsystems erfaßten und in elektrische Ausgangssignale umgesetzten kinetischen Energie auftreffender Niederschläge, bei welchem die Ausgangssignale des Sensors zur Ansteuerung einer Wischermotor - Steuerschaltung über eine Übertragungsstrecke zu einem Verstärker mit einem Verstärkungsfaktor geleitet werden,
**gekennzeichnet durch**
Veränderung der elektrischen Eigenschaften der Übertragungsstrecke in Abhangigkeit von der Umgebungstemperatur, in dem Sinne, daß die Ansprechempfindlichkeit des Sensorsystems bei abnehmenden Temperaturen vergrößert wird.

2. Verfahren nach Anspruch 1,
**gekennzeichnet durch**
Vergrößerung der Ansprechempfindlichkeit des Sensorsystems in einer Stufe beim Abwärtsdurchlaufen eines wenigstens in der Nahe des Gefrierpunktes liegenden Wertes der Umgebungstemperatur.

3. Verfahren nach Anspruch 1,
**gekennzeichnet durch**
kontinuierliche Vergrößerung der Ansprechempfindlichkeit des Sensorsystems bei sinkenden und Verkleinerung bei steigenden Temperaturen.

4. Verfahren nach Anspruch 2 oder 3,
**gekennzeichnet durch**
Verringerung der Ansprechempfindlichkeit des Sensorsystems bei zunehmender Fahrzeuggeschwindigkeit.

5. Vorrichtung zur Steuerung von Wischintervallen eines Scheibenwischerantriebs eines Kraftfahrzeugs mit
- einem einen druckempfindlichen Sensor aufweisenden Sensorsystem,
- einem Wischintervallsteuergerät, dessen Intervalldauer durch das Sensorsystem in Abhängigkeit von der durch den Sensor erfaßten und in elektrische Ausgangssignale umgesetzten kinetischen Energie auftreffender Niederschläge veränderbar ist,
- mit einem in dem Sensorsystem vorgesehenen Verstärker zur Verstärkung der ihm über eine Übertragungsstrecke zugeleiteten Ausgangssignale des Sensors,
insbesondere zur Durchführung des Verfahrens nach Anspruch 1,
**gekennzeichnet durch**
- wenigstens ein den elektrischen Gesamtwiderstand der Übertragungsstrecke (2) zwischen Sensor (1) und Verstärker (3) in Abhängigkeit von der Umgebungstemperatur
- bei fallender Umgebungstemperatur verkleinerndes,
- bei steigender Umgebungstemperatur vergrößerndes Bauelement (7; 11, 12', 13' , 14).

6. Vorrichtung nach Anspruch 5,
**gekennzeichnet durch**
einen in der Übertragungsstrecke (2) vorgesehenen temperaturabhängig veränderlichen elektrischen Widerstand (7).

7. Vorrichtung nach Anspruch 5,
**gekennzeichnet durch**
- einen bei einem vorbestimmten Wert (SWW) der Umgebungstemperatur schaltenden Schwellwertschalter (11),
- eine von dem Schwellwertschalter (11) schaltbare Umschaltvorrichtung (14) und
- wenigstens zwei elektrische Verbindungsabschnitte (12, 13) mit unterschiedlichen elektrischen Widerständen (12', 13'), deren größerer (13') bei oberhalb des vorbestimmten Wertes (SWW) und deren kleinerer (12') bei unterhalb des vorbestimmten Wertes (SWW) liegender Umgebungstemperatur von der Umschaltvorrichtung (14) in den Gesamtwiderstand der Übertragungsstrecke (2) eingeschaltet wird.

8. Vorrichtung nach Anspruch 6 oder 7,
**gekennzeichnet durch**
ein weiteres, den Gesamtwiderstand der Übertragungsstrecke (2)
- bei fallender Fahrgeschwindigkeit vergrößerndes,
- bei steigender Fahrgeschwindigkeit verkleinerndes elektrisches Bauelement (9).

9. Vorrichtung nach Anspruch 8,
**gekennzeichnet durch**
einen seinen Widerstand in Abhängigkeit von Ausgangssignalen eines elektronischen Tachometers (10) ändernden und in die Übertragungsstrecke (2) eingeschalteten Varistor (9).

## Claims

1. Process for adapting the sensitivity of a sensor system for the detection of precipitations during the control of wiping intervals of a screenwiper drive of a motor vehicle as a function of the kinetic energy of striking precipitations detected by a pressure-sensitive sensor of a censor system and converted into electrical output signals, in which the output signals of the sensor are sent via a transmission path to an amplifier with an amplification factor for the purpose of activating a wiper-motor control circuit, characterized by a variation in the electrical properties of the transmission path as a function of the ambient temperature, to the effect that the responsiveness of the sensor system is increased at decreasing temperatures.

2. Process according to Claim 1, characterized by an increase in the responsiveness of the sensor system in one step during the downward passage through a value of the ambient temperature located around freezing point.

3. Process according to Claim 1, characterized by a continuous increase in the responsiveness of the sensor system at falling temperatures and a reduction thereof at rising temperatures.

4. Process according to Claim 2 or 3, characterized by a reduction of the responsiveness of the sensor system at an increasing vehicle speed.

5. Device for controlling wiping intervals of a screenwiper drive of a motor vehicle, with
- a sensor system having a pressure-sensitive sensor,
- a wiping-interval control unit, the interval time of which can be varied by the sensor system as a function of the kinetic energy of striking precipitations which is detected by the sensor and which is converted into electrical output signals,
- and an amplifier provided in the sensor system for amplifying the output signals of the senior fed to it via a transmission path,
especially for carrying out the process according to Claim 1,
characterized by
- at least one component (7;11, 12', 13', 14) which, at a falling ambient temperature, reduces and, at a rising ambient temperature, increased the total electrical resistance of the transmission path (2) between the sensor (1) and amplifier (3) as a function of the ambient temperature.

6. Device according to Claim 5, characterized by an electrical resistor (7) provided in the transmission path (2) and variable as a function of temperature.

7. Device according to Claim 5, characterized by
- a threshold switch (11) switching at a predetermined value (SWW) of the ambient temperature,
- a change-over device (14) switchable by the threshold switch (11), and
- at least two electrical function segments (12, 13) with different electrical resistances (12', 13'), of which, at an ambient temperature lying above the predetermined value (SWW), the higher (13') and, at an ambient temperature lying below the predetermined value (SWW), the lower (12') is switched into the total resistance of the transmission path (2) by the change-over device (14).

8. Device according to Claim 6 or 7, characterized by a further electrical component (9) increasing the total resistance of the transmission path (2) at a decreasing driving speed and reducing it at an increasing driving speed.

9. Device according to Claim 8, characterized by a varistor (9) changing its resistance as a function of output signals from an electronic speedometer (10) and switched into the transmission path (2).

## Revendications

1. Procédé pour adapter la sensibilité d'un système à capteur servant à détecter des chutes de pluie lors de la commande d'intervalles d'essuyage d'un dispositif d'entraînement d'essuie-glace d'un véhicule automobile en fonction de l'énergie cinétique de chutes de pluie qui se produisent, détectée par un capteur sensible à la pression, d'un système à capteur, et convertie en des signaux électriques de sortie, et selon lequel les signaux de sortie du capteur sont envoyés par l'intermédiaire d'une section de transmission à un amplificateur possédant un facteur d'amplification, pour la commande d'un circuit de commande d'un moteur d'essuie-glace, caractérisé par une modification des caractéristiques électriques de la section de transmission en fonction de la température ambiante de telle sorte que la sensibilité de réponse du système à capteur est accrue dans le cas de températures allant en diminuant.

2. Procédé selon la revendication 1, caractérisé par un accroissement de la sensibilité de réponse du système à capteur en une étape lorsque la température ambiante tombe au-dessous d'une valeur située au moins à proximité du point de la température de gel.

3. Procédé selon la revendication 1, caractérisé par un accroissement continu de la sensibilité de réponse du système à capteur dans le cas de températures qui vont en diminuant et par une réduction continue de cette sensibilité dans le cas de températures allant en augmentant.

4. Procédé selon la revendication 2 ou 3, caractérisé par une réduction de la sensibilité de réponse du système à capteur lorsque la vitesse du véhicule diminue.

5. Dispositif pour commander des intervalles d'essuyage d'un dispositif d'entraînement d'essuie-glace d'un véhicule automobile comportant
- un système à capteur comprenant un capteur sensible à la pression,
- un appareil de commande des intervalles d'essuyage, dont la durée peut être modifiée par le système à capteur en fonction de l'énergie cinétique de chutes de pluie qui se produisent, détectée par le capteur et convertie en signaux électriques de sortie,
- un amplificateur prévu dans le système à capteur et servant à amplifier les signaux de sortie du capteur, qui lui sont envoyés par l'intermédiaire d'une section de transmission,
notamment pour la mise en oeuvre du procédé selon la revendication 1,
caractérisé par
- au moins un composant (7;11,12',13',14), qui modifie, en fonction de la température ambiante, la résistance électrique totale de la section de transmission (2) entre le capteur (1) et l'amplificateur (3),
- en la réduisant lorsque la température ambiante diminue,
- en l'augmentant lorsque la température ambiante augmente.

6. Dispositif selon la revendication 5, caractérisé par une résistance électrique (7) prévue dans la section de transmission (2) et variable en fonction de la température.

7. Dispositif selon la revendication 5, caractérisé par
- un commutateur à valeur de seuil (11), qui commute pour une valeur prédéterminée (SWW) de la température ambiante,
- un dispositif de commutation (14) commutable par le commutateur à valeur de seuil (11), et
- au moins deux sections électriques de liaison (12,13) possédant des résistances électriques différentes (12',13'), dont la plus élevée (13') est branchée dans la résistance totale de la section de transmission (2) par le dispositif de commutation (14) lorsque la température ambiante est supérieure à la valeur prédéterminée (SWW), et dont la plus faible (12') est branchée dans ladite résistance totale lorsque la température ambiante est inférieure à la valeur prédéterminée (SWW).

8. Dispositif selon la revendication 6 ou 7, caractérisé par un autre composant électrique (9), qui modifie la résistance totale de la section de transmission (2)
- en l'augmentant lorsque la vitesse de déplacement diminue,
- en la réduisant lorsque la vitesse de déplacement augmente.

9. Dispositif selon la revendication 8, caractérisé par une varistance (9) dont la résistance varie en fonction de signaux de sortie d'un tachymètre électronique (10) et qui est branché dans la section de transmission (2).
